# EUROPÄISCHE PATENTANMELDUNG

(11) **EP 1 521 000 A1**
(43) Veröffentlichungstag der Anmeldung: **06.04.2005**
(21) Anmeldenummer: 04021406.6
(22) Anmeldetag: 09.09.2004
(51) Int. Cl.: F16C 11/10, F16D 65/14

(54) **Vorrichtung zum Verklemmen zweier drehbar gegeneinander gelagerter Teile**

(30) Priorität: 01.10.2003 DE 10345867
(71) Anmelder: ROBERT BOSCH GMBH, 70442 Stuttgart (DE)
(72) Erfinder: Neubauer, Achim, 76547 Sinzheim-Vormberg (DE); Lampert, Rico, 77880 Sasbach (DE); Tasch, Franz, 76287 Rheinstetten (DE); Haussecker, Walter, 77830 Buehlertal (DE); Raecke, Mathis, 76131 Karlsruhe (DE); Kurzmann, Rainer, 77855 Achern (DE); Goedecke, Martin, 77815 Buehl (DE); Moench, Jochen, 76547 Sinzheim (DE); Froehlich, Peter, 76133 Karlsruhe (DE); Bueyuekasik, Diyap, 77815 Buehl (DE); Denne, Bernhard, 77652 Offenburg (DE); Schaefert, Arthur, 77830 Buehlertal (DE)

(57) **Zusammenfassung**

Vorrichtung (10) zum Verklemmen zweier drehbar gegeneinander gelagerten Teile (17, 19), die jeweils eine Oberfläche (22, 24) aufweisen, die zur Ausbildung eines Reibschlusses zwischen den beiden Oberflächen (22, 24) mit einen Kraft beaufschlagbar sind, wobei die Kraft zum Aneinanderpressen oder Lösen der beiden Oberflächen (22, 24) durch eine Verformung eines Bauelements (28) mit einem reversibel verformbaren Werkstoff (30) aufgebracht wird, und die Materialverformung mittels Zuführen von elektrischer Energie steuerbar ist.

## Beschreibung

### Stand der Technik

Die Erfindung betrifft eine Vorrichtung zum Verklemmen zweier drehbar gegeneinander gelagerten Teile nach der Gattung des unabhängigen Anspruchs 1.

Mit der DE 30 30 767 C2 ist eine Sicherheitskurbel für handgetriebene Hebezeuge mit einer selbsttätigen Rücklaufsicherung bekannt geworden, bei der zwischen der Kurbel und einem diese umgebenden Gehäuse ein doppelwirkendes Schräubenfedergesperre angeordnet ist. Im Lastzustand des Hebezeugs wird dadurch ein Zurückdrehen der Kurbel entgegen der Heberichtung verhindert. Eine solche Lastmomentsperre hat den Nachteil, dass diese nur ab einer konstruktionsbedingten Lastschwelle ausgelöst wird. Es besteht beispielsweise keine Möglichkeit die Welle im unbelasteten Zustand drehsicher zu blockieren. Außerdem kann eine solche Schraubenfeder nicht in das Lager eines drehbar angeordneten Teils integriert werden, da die Reibfläche der Schraubenfeder keine Lagerfläche für das drehbare Teil bildet.

Desweiteren sind Elektromotoren, beispielsweise für Fensterheber bekannt, deren Ankerwellen mittels Wälz- oder Kugellager gelagert sind. Eine Selbsthemmung des Antriebs wird hierbei durch die Auslegung eines Schneckengetriebes erzielt, wobei die Steigung und Zahnform der Schnecke und des Schneckenrads derart gewählt sind, dass bei einer lastseitigen Einleitung eines Drehmoments ein Zurückdrehen der Ankerwelle verhindert wird. Die Ausbildung eines solchen selbsthemmenden Schneckengetriebes hat allerdings den Nachteil, dass hierbei der Wirkungsgrad recht gering ist (kleiner als 50%).

### Vorteile der Erfindung

Die erfindungsgemäße Vorrichtung zum Verklemmen zweier drehbar zueinander gelagerten Teile mit den kennzeichnenden Merkmalen des unabhängigen Anspruchs 1 hat den Vorteil, dass die beiden Teile jederzeit, individuell steuerbar mittels dem Bauelement miteinander verklemmt werden können. Da beispielsweise bei einem Elektromotor schon elektrische Anschlüsse in unmittelbarer Nähe zur Ankerwellenlagerung vorhanden sind, kann das Bauelement ohne großen Verkabelungsaufwand einfach mit Spannung oder Strom versorgt werden. Aufgrund des reversibel verformbaren Werkstoffs des Bauelements kann dieses in einfacher Weise in das Lager integriert werden, wobei das Bauelement entweder direkt eine Lageroberfläche bildet, oder eine Kraft auf ein Zwischenlager ausübt, wobei durch eine relativ geringe Verformung des Werkstoffs eine Anpresskraft zum Verklemmen der beiden Oberflächen erzeugt wird. Eine solche Verklemmvorrichtung arbeitet völlig geräuschlos, und es ist kein zusätzlicher Antrieb oder Getriebe, wie bei einem motorisch betätigten Aktuator notwendig. Aufgrund der Verklemmvorrichtung kann beispielsweise das Getriebe eines Elektromotors zur Erzielung eines höheren Wirkungsgrad optimiert werden, da das Getriebe keine Selbsthemmung aufweisen muss. Dadurch kann der Antrieb des Elektromotors entsprechend kleiner ausgelegt werden. Durch die einfache Steuerung der Anpresskraft mittels der Energiezufuhr können beliebige Brems-Prozesse oder Hemmungszustände realisiert werden. Das Erzeugen der Anpresskraft durch eine relativ geringe ' Volumenänderung des Werkstoffs ist sehr effizient, da einerseits wenig Energie notwendig ist und gleichzeitig sehr kurze Reaktionszeiten erzielt werden können.

Durch die in den Unteransprüchen aufgeführten Maßnahmen ergeben sich vorteilhafte Weiterbildungen und Verbesserungen der im Anspruch 1 angegebenen Merkmale. Aufgrund der Materialeigenschaften des Werkstoffs, kann dessen Volumen durch das Anlegen eines elektrischen oder magnetischen Feldes sehr fein variiert und einfach geregelt werden. Dadurch entfällt die Übersetzung von einem Antrieb auf ein Stellglied zum Verklemmen der beiden Teile, wodurch die Verklemmvorrichtung sowohl baulich als auch regelungstechnisch deutlich vereinfacht wird.

Durch die Verwendung eines elektroaktiven oder magnetostriktiven Materials für das Bauelement, kann dieses optimal an die geometrischen Verhältnisse der Lagerung der beiden Teile angepasst werden, wodurch die Abmessung des Lagers und des Bauelements derart gewählt werden können, dass durch eine minimale Ausdehnung des Werkstoffs große Kräfte zum Verklemmen, oder zum Loslösen einer Verklemmung erzeugt werden. Hierbei tritt kein mechanischer Verschleiß auf, so dass diese Materialien eine hohe Lebensdauer aufweisen.

Unabhängig vom Betriebszustand der drehbar gelagerten Teile können diese jederzeit durch einfaches Anlegen einer Spannung oder eines Stroms in ihrer Position festgesetzt werden. Da die angelegte Spannung bzw. Strom eindeutig mit der Materialverformung des Werkstoffs korreliert ist, lässt sich die Verklemmvorrichtung sehr einfach elektrisch regeln.

Das Bauelement mit dem verformbaren Werkstoff eignet sich besonders für das Verklemmen von drehbar gelagerten Teilen, da durch die kreisförmige Ausbildung des Bauelements mittels einer relativ geringen Volumenänderung des Werkstoffs Radialkräfte erzeugt werden können, die gleichzeitig über eine große ring- oder kugelförmige Lageroberfläche wirken können.

Daher ist ein solches Bauelement ideal für die Kombination mit Lageroberflächen geeignet, die in etwa einen Zylindermantel,.oder eine Kugeloberfläche bilden, wie dies bei einer Wellenlagerung oder einem Kugelgelenk der Fall ist.

Für das Verklemmen einer Wellenlagerung ist es günstig, das Bauelement ringförmig um die Lageroberflächen anzuordnen, wobei ein der Lageroberflächen von dem Bauteil selbst bebildet werden kann. Dabei kann durch eine Verringerung des Innendurchmessers des Werkstoffs eine hohe Anpresskraft zur Bildung eines Reibschluss erzeugt werden.

Ist eines der drehbar gelagerten Teile als Hohlwelle oder Hohlkugel ausgebildet, kann das Bauelement auch innerhalb dieses Teils angeordnet werden, wobei dann durch eine Ausdehnung des Außendurchmessers des Bauteils eine radial nach außen gerichtete Klemmkraft auf die Lageroberflächen ausgeübt werden kann.

Zur Reduzierung der für die Verklemmung notwendigen Anpresskräfte ist es von Vorteil, zumindest eine der beiden zylinder- oder kugelförmigen Lagerschalen mit einem Schlitz auszubilden, so dass diese radial leichter beweglich sind. Dieser Schlitz kann sehr geringe Abmessungen aufweisen, verglichen mit der Lageroberfläche, so dass die Lagerqualität durch den Spalt in der Lageroberfläche nicht wesentlich beeinflusst wird.

Besonders günstig ist es, das Bauelement mit dem reversibel verformbaren Werkstoff direkt als Lageroberfläche eines der beiden drehbar gelagerten Teile auszubilden. Durch die Verwendung von magnetostriktivem Sintermaterial kann hierdurch ohne Verwendung weiterer Bauteile eine Lageraufnahme oder eine Welle, oder einen Kugelkopf geschaffen werden, die auch noch bei Temperaturen bis zu 400°C einsetzbar sind. Bei geringeren Temperaturanforderungen kann als Baustoff beispielsweise auch ein elektroaktives Polymermaterial verwendet werden, wobei dieses nicht direkt als Lageroberfläche ausgebildet ist, sondern ein anderes Bauteil, beispielsweise ein Kugelkopf oder eine separate Lagerbuchse gegen die zweite Lageroberfläche presst.

Bei der Verwendung eines magnetostriktiven Materials, wie beispielsweise einem Sinterwerkstoff, ist in einer bevorzugten Ausgestaltung das Wellenlager einstückig mit einer Lageroberfläche ausgebildet, wobei in dem Lagerkörper eine Spule integriert ist, die beim Anlegen eines Stroms ein Magnetfeld erzeugt, um den Innendurchmesser des Lagers zu variieren.

In einer weiteren Ausführung wird als Werkstoff für die Volumenänderung ein elektroaktives Polymermaterial (EAP) verwendet, das beispielsweise aus verschiedenen Schichten aufgebaut ist, die jeweils Elektroden zum Anlegen einer Spannung aufweisen. Auf diese Weise kann eine starke Änderung des Durchmessers des Bauelements erzeugt werden, die über eine angelegte Spannung/Strom steuerbar ist.

Weist das aus EAP gebildete Bauteil eine reibfeste Beschichtung auf, kann das Bauteil direkt als Lagerkörper oder separater Bremskörper verwendet werden, der am Gehäuse befestigt wird. Durch die direkte Aufnahme des Drehkörpers/Welle kann auf die Verwendung eines separaten Lagerrings verzichtet werden. Aus Kostengründen kann das Bauteil auch nur abschnittsweise aus EAP, und andere Segmente mit kostengünstigeren Isolierschichten gebildet werden.

Die Klemmvorrichtung kann derart ausgelegt werden, dass in elektrisch aktivem Zustand des Bauelements die beiden Lageroberflächen kraftschlüssig gegeneinander gepresst werden, was einer elektrisch betätigbaren Bremse entspricht.

In einer alternativen Ausführung sind die beiden Teile im elektrisch inaktiven Zustand ständig gegeneinander verklemmt, und werden erst beim Zuführen einer Energie gelöst, sodass sie frei gegeneinander beweglich sind. Eine solche Ausgestaltung garantiert beispielsweise, dass beim Abschalten eines Elektromotors eines Verstellantriebs die beweglichen Teile sicher in ihrer Position verharren, unter anderem auch bei einer unerwünschten Unterbrechung der Energiezufuhr.

### Zeichnungen

In den Zeichnungen sind verschiedene Ausführungsbeispiele einer erfindungsgemäßen Vorrichtung dargestellt und in der nachfolgenden Beschreibung näher erläutert. Es zeigen
Figur 1 eine Vorrichtung zum Verklemmen einer Ankerwelle eines Elektromotors,
Figur 2 ein erfindungsgemäßes Bauelement, das direkt als Wellenlager ausgebildet ist,
Figur 3 ein weiteres Ausführungsbeispiel eines Bauelements das als Wellenlager ausgebildet ist,
Figur 4 ein weiteres Ausführungsbeispiel einer Wellenlagerung,
Figur 5 bis 8 Details eines weiteren Ausführungsbeispiels mit der Verwendung von EAP und
Figur 9 eine Klemmvorrichtung für ein Kugelgelenk zweier gegeneinander verdrehbar gelagerten Teile.

### Beschreibung

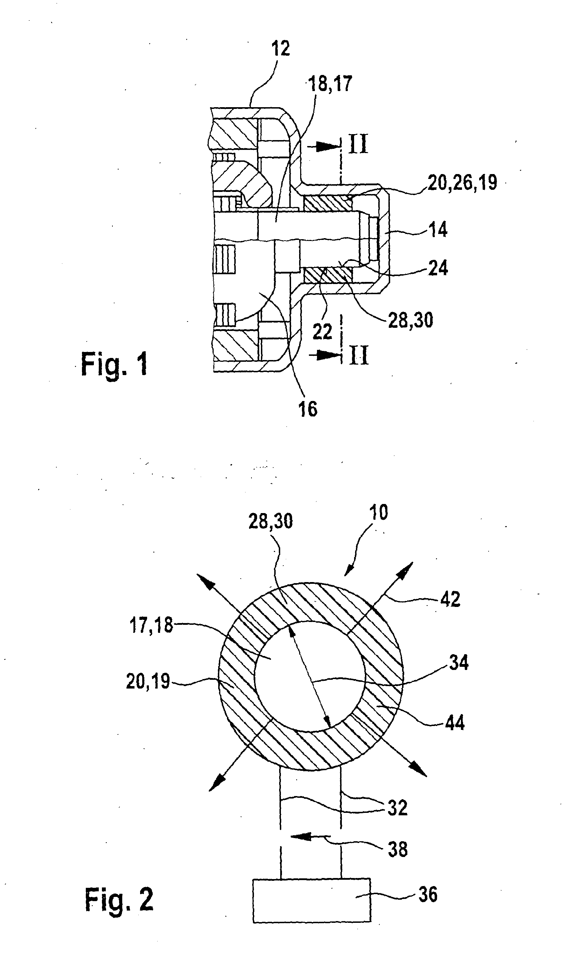

Figur 1 zeigt einen Ausschnitt eines Elektromotors 12, mit einem Gehäuse 14, in dem ein Anker 16 mit eine Ankerwelle 18 als zweites Teil 17 gelagert ist. Hierzu ist ein zylindrischer Lagerkörper 20 als erstes Teil 19 am Gehäuse 14 fixiert, und nimmt in einer Lageroberfläche 22, die als Zylindermantelfläche ausgebildet ist, die Ankerwelle 18 mit ihrer ebenfalls zylindermantelförmigen Oberfläche 24 auf. Der Lagerkörper 20 ist hierbei als Zylinder-Gleitlager 26 ausgebildet, wobei der Lagerkörper 20 durch ein Bauelement 28 mit einem reversibel verformbaren Werkstoff 30 gebildet ist, um eine Verklemmvorrichtung 10 für die Ankerwelle 18 zur Verfügung zu stellen.

Das Prinzip der Verklemmvorrichtung 10 ist in Figur 2 in einer Darstellung gemäß Schnitt II-II in Figur 1 schematisch dargestellt. Die Passung zwischen der Lageroberfläche 22 des Bauelements 28 und der Lageroberfläche 24 der Welle 18 ist beispielsweise derart gewählt, dass in einem Ruhezustand des Elektromotors 12 aufgrund eines Reibschlusses zwischen den beiden Lageroberflächen 22 und 24 ein Verdrehen der beiden Teile 17, 19 durch die Passung verhindert wird. Wird nun dem Bauelement 28 über Anschlüsse 32 elektrische Energie zugeführt, verformt sich der Werkstoff 30 des Bauelements 28 derart, dass sich der Innendurchmesser 34 des Lagerkörpers 20 weitet und die Welle 18 sich somit frei beweglich im Lagerkörper 20 drehen kann. Wird die Energiezufuhr zum Bauelement 28 unterbrochen, verringert sich der Innendurchmesser 34 wieder, so dass die beiden Teile 17 und 19 wieder gegeneinander verklemmen. Die Verformung des Werkstoffs 30 wird hierbei über eine Elektronikeinheit 36 gesteuert, die je nach Werkstoff 30 eine Spannung 38 oder einen Strom 40 als Regelgröße zur Verfügung stellt. Im Ausführungsbeispiel gemäß Figur 2 ist als Werkstoff 30 ein elektroaktives Material 31 - beispielsweise ein Kristall oder ein Kunststoff - verwendet, das aufgrund des piezoelektrischen Effekts in der Lage ist, eine angelegte Spannung 38 in eine geometrische Verformung umzuwandeln. Hierbei tritt unter Beibehaltung eines konstanten Volumens eine Längenänderung auf, die sich aufgrund der ringförmigen Bauform des Bauteils 28 als Vergrößerung des Innendurchmessers 34 auswirkt. Diese radial nach außen gerichtete Materialverformung 42 bewirkt eine Reduzierung der Anpresskraft auf die Welle 18. Wird die Spannung 38 abgeschaltet, verformt sich der Werkstoff 30 in seine ursprüngliche Form zurück, wodurch wieder radial auf die Welle 18 gerichtete Anpresskräfte zwischen den beiden Oberflächen 22 und 24 erzeugt werden, die die Welle 18 festsetzen.

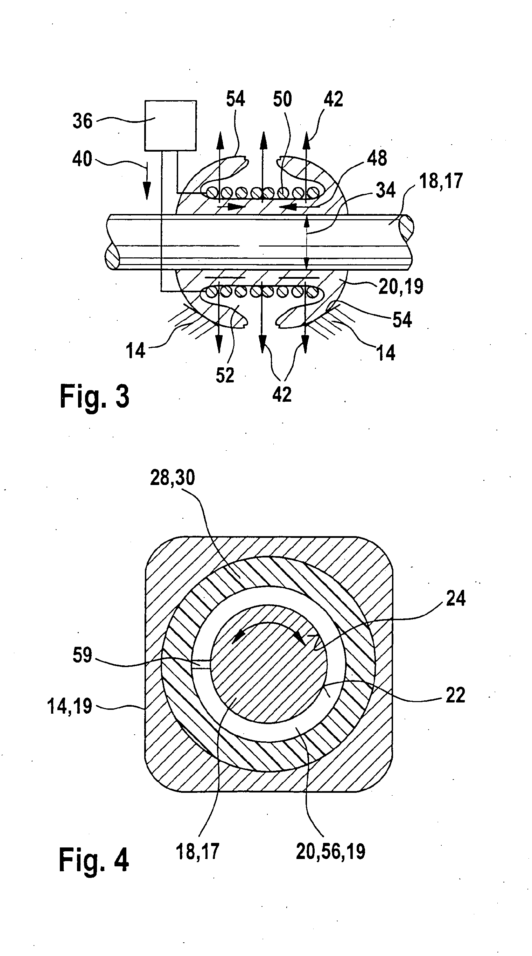

Figur 3 zeigt als ein erstes Teil 19 einen Lagerkörper 20, der aus einem magnetostriktiven Werkstoff 44 hergestellt ist, und eine Lageroberfläche 22 zur direkten Aufnahme eines als Welle 18 ausgebildeten zweiten Teils 17 aufnimmt. Das magnetostriktive Material 44 - beispielsweise SmFe₂ - erfährt beispielsweise in Gegenwart eines magnetischen Feldes eine negative Längenänderung 48 in axialer Richtung, wodurch sich der Innendurchmesser 34 des ringförmigen Bauelements 28 weitet, und damit die Welle 18 aus ihrer drehgehemmten Position freigibt. Zur Erzeugung eines Magnetfeldes in axialer Richtung ist innerhalb des Bauelements 28 eine Spule 50 um den Innendurchmesser 34 angeordnet, die über eine Elektronikeinheit 36 bestromt werden kann. Die Spule 50 ist in Figur 3 in einer zylindermantelförmigen Ausnehmung 52 des Bauelements 28 angeordnet, um durch den Rückschluss mittels des Werkstoffs 30 die Feldstärke im Bereich der beiden Lageroberflächen 22, 24 zu verstärken. Am radial äußeren Bereich 54 ist der Lagerkörper 20 am Gehäuse 14 befestigt, um eine Drehbewegung der Welle 18 gegenüber dem Gehäuse 14 zu ermöglichen, oder mittels der Verklemmvorrichtung 10 zu unterbinden. Durch die Wahl des magnetostriktiven Werkstoffs 44, beispielsweise mit positiven magnetostriktiven Eigenschaften, kann die Vorrichtung 10 zum Verklemmen zweier drehbar gelagerten Teile (19, 17) auch derart betrieben werden, dass der Innendurchmesser 34 im stromlosen Zustand der Spule 50 so dimensioniert ist, dass die Welle 18 im Lagerkörper 20 frei drehbar ist und erst beim Anlegen eines Stromes 40 sich der Werkstoff 30 derart verformt, dass sich der Innendurchmesser 34 verringert und eine Pressung erzeugt wird, die einen Reibschluss zwischen den beiden Lageroberflächen 22 und 24 herstellt. Bei einem Lagerdurchmesser 34 von ca. 9 mm wird bei einer Stromstärke von beispielsweise 10 A eine Variation des Innendurchmessers 34 von ca. 10 µm erzeugt, wobei ein solcher Lagerkörper 20 bis zur materialspezifischen Curie-Temperatur von beispielsweise 415 °C (für SmFe₂) einsetzbar ist.

In einem weiteren Ausführungsbeispiel gemäß Figur 4 ist der Lagerkörper 20 als Lagerring 56 ausgebildet, der vom ringförmigen Bauelement 28 umschlossen ist. Der Lagerring 56 weist hierbei eine harte, widerstandfähige Oberfläche 22 für die gleitende Aufnahme der Welle 18 mit deren Lageroberfläche 24 auf. Das Bauteil 28 ist hier aus einem elektroaktiven Polymermaterial (EAP) 33 als Werkstoff 30 gebildet, dessen Materialeigenschaften unter bestimmten Betriebsbedingungen (z.B. hohe Temperatur) nicht zur direkten Lagerung einer Welle 18 geeignet sind. Der verformbare Werkstoff 30 ist über Elektroden 58 mit einer Elektronikeinheit 36 verbunden, über die eine steuerbare Spannung 38 angelegt werden kann. Durch die elektrische Spannung 38 wird im elektroaktiven Material 33 ein elektrisches Feld erzeugt, das beispielsweise zur Streckung oder Stauchung einzelner kettenförmiger Moleküle führt. Ist das EAP-Material 33 beispielsweise im elektrisch inaktiven Zustand entspannt lang, kontrahiert dieses bei Anlegen einer Spannung. Durch die ringförmige Ausbildung des Bauelements 28 wird der Innendurchmesser 34 verringert und eine radiale Kraft auf den Lagerring 56 ausgeübt, der wiederum mit seiner Lageroberfläche 22 gegen die entsprechende Lageroberfläche 24 der Welle 18 gepresst wird. Aufgrund der Variation der an das EAP-Material 33 angelegten Spannung 38 kann somit der Grad der Hemmung der Drehbewegung der Welle 18 gesteuert werden. Der Lagerring 56 weist über seine gesamte axiale Länge einen Spalt 59 auf, wodurch der Lagerring 56 mit einer relativ geringen Kraft gegen die Welle 18 gepresst werden kann. Dadurch genügt eine geringere angelegte Spannung 38, um die Welle 18 zu verklemmen. Das Bauelement 28 ist in seinem äußeren Bereich 54 mit einer Lagervorrichtung 14 oder Gehäuse 14 verbunden, wodurch bei einer Energiezufuhr eine Drehung zwischen der Welle 18 und einem Gehäuse 14 verhindert wird.

Die Form des EAP-Materials 33 kann beliebig variiert werden und somit dem Kraftbedarf, und der Geometrie der gegeneinander drehbaren Teile 17, 19 angepasst werden. So kann in einer Variation der Werkstoff 30 auch derart angeordnet werden, dass die Verdrehung im elektrisch inaktiven Zustand durch Bildung eines Reibschlusses verhindert und in elektrisch aktivem Zustand ermöglicht wird.

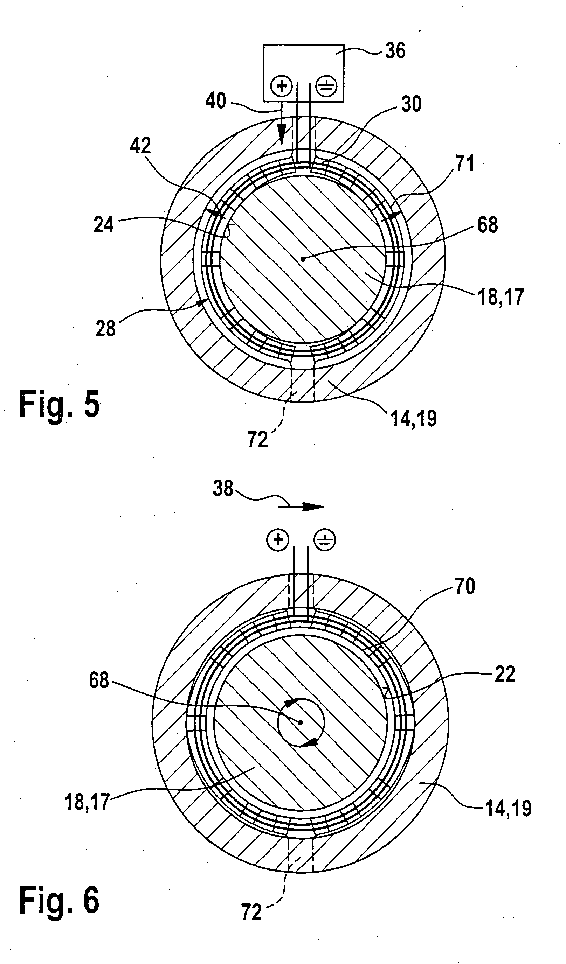

Diese Ausführung ist in der Verklemmvorrichtung 10 der Figuren 5 bis 8 dargestellt. Figur 5 zeigt eine in einem Gehäuse 14 um eine Achse 68 drehbar gelagerte Welle 18, wobei diese vom Bauelement 28 umschlungen ist, das aus elektroaktivem Polymermaterial (EAP) 33 gebildet ist. Das Bauelement 28 ist beispielsweise an zwei gegenüberliegenden Stellen 72 am Gehäuse 14 befestigt und legt sich ringförmig mit seiner Oberfläche 22 an die Oberfläche 24 der Welle 18 an. Hierzu ist die Oberfläche 22 als verschleißfeste Beschichtung 70 des Bauelements 28 ausgebildet, so dass das EAP-Material 33 durch die Brems- und Verklemmvorgänge nicht beschädigt wird. Das Bauelement 28 weist in Umfangsrichtung 82 abwechselnd Segmente aus EAP-Material 33 und aus Isolationsmaterial 71 auf, deren Ausdehnung an den Befestigungsstellen 72 geringer ist, als in den nicht befestigten Bereichen (z. B. 90° von Befestigungsstellen 72 entfernt). Die einzelnen Bereiche des EAP-Materials 33 sind mit ihren Elektroden 58 über flexible elektrische Leitungen 74 mit der Elektronikeinheit 36 verbunden. Fließt im Bauteil 28 kein Strom 40, ist das EAP-Material 33 inaktiv und die Oberfläche 22 der Beschichtung 70 liegt reibschlüssig an der Oberfläche 24 der Welle 18 an, so das diese festgeklemmt ist.

Wird das Bauteil bestromt, wie in Figur 6 dargestellt, wird das EAP-Material 33 aktiviert und dehnt sich aus, so dass sich der Reibschluss löst und sich die Welle 18 in bestromtem Zustand drehen kann.

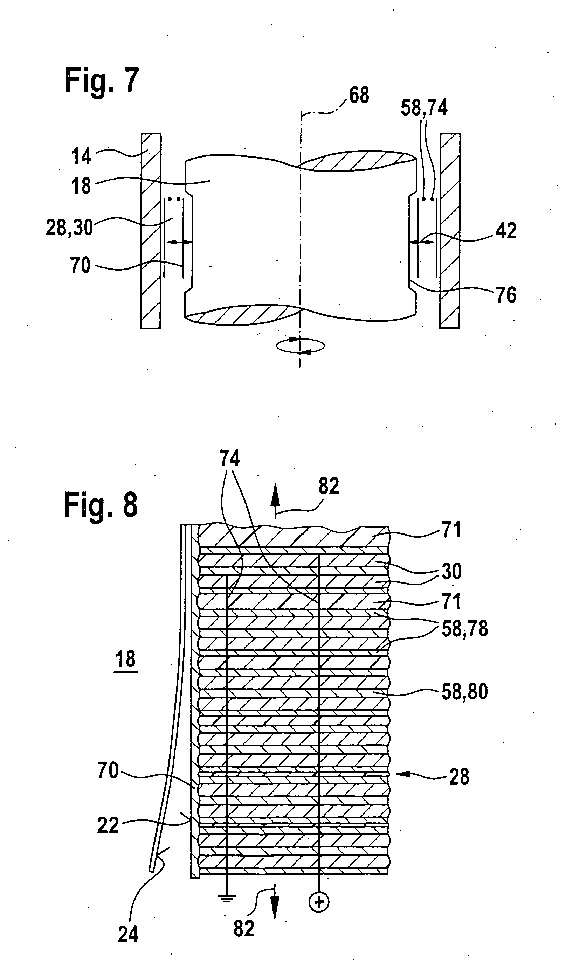

Figur 7 zeigt einen Längsschnitt durch das Gehäuse 14, an dem das ringförmige Bauteil 28 befestigt ist. Die verschleißfesten Beschichtung 70 weist bei Anliegen eines Stroms 40 einen Abstand zur Wellenoberfläche 24 auf, der mittels Regelung des Stroms 40 oder der Spannung 38 verringert werden kann, bis die Welle 18 festgeklemmt ist. Zur Verbesserung des Reibschlusses weist die Welle 18 eine Ausformung 76 zur Wechselwirkung mit der Beschichtung 70 auf.

In Figur 8 ist ein Ausschnitt des ringförmigen Bauelements 28 vergrößert dargestellt. Als Elektroden 58 sind innerhalb der einzelnen EAP-Schichten 33 positiv geladene Schichten 78 und and beiden Rändern zu den Isolierschichten 71 hin negativ geladene Schichten 80 angeordnet. Diese Elektroden 58 sind jeweils mittels den elektrischen Leitungen 74 miteinander und mit der Elektronikeinheit 36 verbunden. Die Dicke der einzelnen Isolierschichten 71 variiert und ist an die Anordnung der Befestigungsstellen 72 angepasst. In Abhängigkeit des angelegten Stroms 40 / Spannung 38 ändert sich die Länge in Umfangsrichtung 82 und damit der Innendurchmesser 34 des Bauteils 28. Das Bauteil 28 ist hier als separate Verklemmvorrichtung 10 ausgebildet, kann aber ebenso wie in Figur 2 und 4 als Lagerkörper 20 mit einer verschleißfesten Beschichtung 70 als Lageroberfläche 22 ausgebildet sein, welche die separate Lagerhülse 56 gemäß Figur 4 ersetzt.

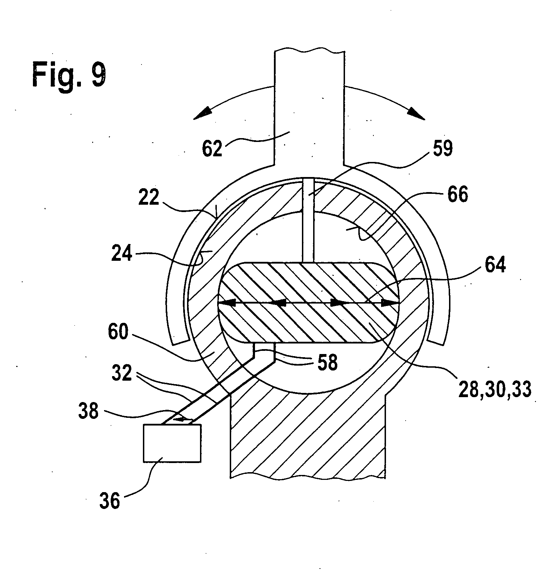

Figur 9 zeigt ein hemmbares Kugelspreizgelenk, bei dem ein Kugelkopf 60 gegenüber einer Kugelpfanne 62 drehbar angeordnet ist. Das Bauelement 28 mit dem EAP-Werkstoff 33 ist innerhalb des Kugelkopfes 60 angeordnet, so dass der Werkstoff 30 mit einem Außendurchmesser 64 an einer Innenwand 66 des Kugelkopfes anliegt. Der Kugelkopf 60 weist einen Spalt 59 auf, so dass beim Zuführen einer Energie an den Werkstoff 30 sich dessen Außendurchmesser 64 verringert und dadurch die Lageroberfläche 24 des vorgespannten Kugelkopfes 60 weniger stark gegen die Lageroberfläche 22 der Kugelpfanne gedrückt wird. Dadurch sind die beiden Teile 60, 62 im elektrisch aktiven Zustand frei gegeneinander drehbar. Wird die Energiezufuhr des Bauelements 28 unterbrochen, so nimmt die radiale Ausdehnung des Werkstoffs 30 und damit sein Außendurchmesser 64 zu, wodurch aufgrund der nach außen gerichteten Radialkraft die Reibung zwischen dem Kugelkopf 60 und der Kugelpfanne 62 erhöht wird, bis die beiden Teile 60, 62 gegeneinander verklemmt sind. Auch dieses System ist invertierbar, so dass die beiden Teile 60, 62 im elektrisch aktiven Zustand gegeneinander verklemmt werden. In Abhängigkeit des verwendeten Materials 30 und der Bauform des Bauelements 28 kann beispielsweise mit einer angelegten Spannung von ca. 3 V ein Druck von über 5 MP erzeugt werden.

Es sei angemerkt, dass hinsichtlich der in allen Figuren gezeigten Ausführungsbeispiele vielfältige Kombinationsmöglichkeiten der einzelnen Merkmale untereinander möglich sind. So kann beispielsweise das Material 30 oder die Bauform des Bauelements 28 und die Art der Energiezufuhr zur Materialverformung des Werkstoffs 30 variiert werden. Die Steuereinheit 36 kann beispielsweise in ein Steuergerät eines Elektromotors 12 integriert sein. Die Vorrichtung 10 zum Verklemmen zweier drehbar gegeneinander gelagerten Teile 19, 17 ist nicht auf einer Wellenlagerung oder ein Kugelgelenk beschränkt, sondern kann überall eingesetzt werden, wo es eine herkömmliche Gesperre-Funktion ersetzen kann. Dabei kann die Klemmvorrichtung 10 mit einer Lageroberfläche 22 in das Lager integriert, oder mit einer Oberfläche 22 des Bauelements 28 separat von der Lagerung angeordnet sein. Bevorzugt findet die erfindungsgemäße Vorrichtung Anwendung bei elektrischen Verstellantrieben, insbesondere für die Verstellung von Luftklappen, Spiegeln, Fensterscheiben, Schiebedächern oder Getriebebauteilen im Kraftfahrzeug. Gleichzeitig dient die Vorrichtung 10 auch der exakten radialen Zentrierung, da durch das Bauelement 28 eine gleichmäßige radial nach innen gerichtete Kraftverteilung erzeugt werden kann. Ferner können Getriebe-Aktuatoren, die starken Vibrationen ausgesetzt sind, hierbei stromlos in Position gehalten werden.

## Patentansprüche

1. Vorrichtung (10) zum Verklemmen zweier drehbar gegeneinander gelagerten Teile (17, 19), die jeweils eine Oberfläche (22, 24) aufweisen, die zur Ausbildung eines Reibschlusses zwischen den beiden Oberflächen (22, 24) mit einer Kraft beaufschlagbar sind, **dadurch gekennzeichnet, dass** die Kraft zum Aneinanderpressen oder Lösen der beiden Oberflächen (22, 24) durch eine Verformung eines Bauelements (28) mit einem reversibel verformbaren Werkstoff (30, 31, 33, 44) aufgebracht wird, wobei die Materialverformung mittels Zuführen von elektrischer Energie steuerbar ist.

2. Vorrichtung (10) nach Anspruch 1, **dadurch gekennzeichnet, dass** die Geometrie des Werkstoffs (30, 31, 33, 44) in Abhängigkeit eines elektrischen oder magnetischen Feldes veränderbar ist.

3. Vorrichtung (10) nach einem der Ansprüche 1 oder 2, **dadurch gekennzeichnet, dass** der Werkstoff (30) ein elektroaktives (31) oder magnetostriktives Material (44) ist.

4. Vorrichtung (10) nach einem der vorhergehenden Ansprüche, **dadurch gekennzeichnet, dass** an das Bauelement (28) eine elektrische Spannung (38) oder ein elektrischer Strom (40) angelegt wird.

5. Vorrichtung (10) nach einem der vorhergehenden Ansprüche, **dadurch gekennzeichnet, dass** das Bauelement (28) einen Innendurchmesser (34) oder Außendurchmesser (64) aufweist, der aufgrund der Materialverformung derart veränderbar ist, dass auf zumindest eine der Oberflächen (22, 24) eine radiale Kraft ausgeübt wird.

6. Vorrichtung (10) nach Anspruch 4, **dadurch gekennzeichnet, dass** die beiden Oberflächen (22, 24) zylindermantelförmig oder kugelflächenförmig ausgebildet sind.

7. Vorrichtung (10) nach einem der vorhergehenden Ansprüche, **dadurch gekennzeichnet, dass** das Bauelement (28) zumindest eines der Teile (17, 19) - insbesondere ringförmig - umschließt und bei einer Verringerung des Innendurchmessers (34) eine Anpresskraft zwischen den beiden Oberflächen (22, 24) erzeugt:

8. Vorrichtung (10) nach einem der vorhergehenden Ansprüche, **dadurch gekennzeichnet, dass** das Bauelement (28) innerhalb zumindest einer der Teile (17, 19) angeordnet ist und bei einer Vergrößerung des Außendurchmessers (64) eine Anpresskraft zwischen den beiden Oberflächen (22, 24) erzeugt.

9. Vorrichtung (10) nach einem der vorhergehenden Ansprüche, **dadurch gekennzeichnet, dass** das Bauelement (28) als Lagerhülse (20) oder Lagerpfanne (62) des ersten Teils (19) ausgebildet ist, das das zweite Teil (17) direkt oder mittels eines separaten Lagerrings (56) aufnimmt.

10. Vorrichtung (10) nach einem der vorhergehenden Ansprüche, **dadurch gekennzeichnet, dass** zumindest eine der beiden Oberflächen (22, 24) einen Spalt (59) zu deren elastischer Dehnung aufweist.

11. Vorrichtung (10) nach einem der vorhergehenden Ansprüche, **dadurch gekennzeichnet, dass** das Bauelement (28) als Sinterlager (20) ausgebildet ist, um das zur Erzeugung eines Magnetfeldes eine Magnetspule (50) angeordnet - insbesondere in den Lagerkörper (20) integriert - ist.

12. Vorrichtung (10) nach einem der vorhergehenden Ansprüche, **dadurch gekennzeichnet, dass** das Bauelement (28) - insbesondere in Schichten angeordnetes - elektroaktives Polymermaterial (33) und dieses kontaktierende Elektroden (58) aufweist.

13. Vorrichtung (10) nach einem der vorhergehenden Ansprüche, **dadurch gekennzeichnet, dass** das elektroaktive Polymermaterial (33) eine verschleißfeste Beschichtung (70) aufweist, die als Oberfläche (22) ausgebildet ist.

14. Vorrichtung (10) nach einem der vorhergehenden Ansprüche, **dadurch gekennzeichnet, dass** das Bauelement (28) in Umfangsrichtung (82) abwechselnd Bereiche mit elektroaktivem Polymermaterial (33) und Bereiche mit Isoliermaterial (71) aufweist.

15. Vorrichtung (10) nach einem der vorhergehenden Ansprüche, **dadurch gekennzeichnet, dass** das Bauelement (28) an Befestigungspunkten (72) am Gehäuse (72) fixiert ist, und die Abstände zwischen den Bereiche mit elektroaktivem Polymermaterial (33) mit zunehmendem Abstand von den Befestigungspunkten (72) zunimmt.

16. Vorrichtung (10) nach einem der vorhergehenden Ansprüche, **dadurch gekennzeichnet, dass** die beiden Oberflächen (22, 24) beim Zuführen von elektrischer Energie zur Bildung eines Reibschlusses gegeneinander gepresst werden.

17. Vorrichtung (10) nach einem der vorhergehenden Ansprüche, **dadurch gekennzeichnet, dass** die beiden Oberflächen (22, 24) beim Zuführen von elektrischer Energie aus einem vorherigen Klemmzustand gelöst werden.
